# EUROPEAN PATENT SPECIFICATION

(11) **EP 1 716 081 B1**
(45) Date of publication and mention of the grant of the patent: **23.12.2015**
(21) Application number: 04772001.6
(22) Date of filing: 17.08.2004
(51) Int. Cl.: C01F 11/22, C02F 1/58, B01D 9/02

(54) **METHOD FOR PRODUCING CALCIUM FLUORIDE, REUSING METHOD AND RECYCLING METHOD THEREOF**
VERFAHREN ZUR HERSTELLUNG VON CALCIUMFLUORID, WIEDERVERWENDUNGSVERFAHREN UND REZYKLIERUNGSVERFAHREN DAFÜR
PROCEDE POUR PRODUIRE DU FLUORURE DE CALCIUM, PROCEDE DE REUTILISATION ET PROCEDE DE RECYCLAGE CORRESPONDANTS

(30) Priority: 21.01.2004 JP 2004013191
(43) Date of publication of application: 02.11.2006
(73) Proprietor: Morita Chemical Industries Co. Ltd., Osaka-shi, Osaka 5410056 (JP)
(72) Inventor: MOMOTA, Kunitaka, Osaka-shi, Osaka 5410056 (JP); YAMAMOTO, Kazumasa, Osaka-shi, Osaka 5410056 (JP); INOUE, Youichi, Osaka-shi, Osaka 5410056 (JP); WATANABE, Shuuichi, Osaka-shi, Osaka 5410056 (JP)
(74) Representative: Von Kreisler Selting Werner - Partnerschaft von Patentanwälten und Rechtsanwälten mbB
(86) International application number: PCT/JP2004/012040
(87) International publication number: WO 2005/070831

(56) References cited:
- JP-A- 11 130 427
- JP-A- 51 110 498
- JP-A- 2000 033 386
- JP-A- 2003 225 678
- JP-A- 2003 305 458
- JP-A- 2004 255 228
- US-A1- 2002 117 456
- DATABASE WPI Week 198151 Thomson Scientific, London, GB; AN 1981-94140D XP002578820 & JP 56 144792 A (HITACHI PLANT ENG & CONSTR CO) 11 November 1981 (1981-11-11)
- DATABASE WPI Week 198215 Thomson Scientific, London, GB; AN 1982-29525E XP002578821 & JP 57 038985 A (HITACHI PLANT ENG & CONSTR CO) 3 March 1982 (1982-03-03)
- C.J. HUANG ET AL.: "Precipitate flotation of fluoride-containing wastewater from a semiconductor manufacturer" WATER RESEARCH, vol. 33, no. 16, 1999, pages 3403-3412, XP002578819
- DATABASE WPI Week 198039 Thomson Scientific, London, GB; AN 1980-68516C XP002578822 & JP 55 104692 A (HITACHI PLANT ENG & CONSTR CO) 11 August 1980 (1980-08-11)

## Description

### FIELD OF THE INVENTION

The present invention relates to a method for producing calcium fluoride having such purity and a particle size as to be usable as a raw material for producing hydrogen fluoride as it is, from a fluoride-containing effluent containing little hydrofluoric acid but a comparatively high concentration of fluoride, or from an effluent containing hydrofluoric acid. In addition, the present invention relates to a method for reacting hydrochloric acid by-produced in a reaction with an alkaline calcium salt to prepare an aqueous calcium chloride solution, and reusing the aqueous solution as a calcium source for recovering calcium fluoride. The present invention further relates to a method for recycling the recovered calcium fluoride.

### BACKGROUND OF THE INVENTION

In a process of treating a fluoride-containing effluent containing little hydrofluoric acid or an effluent containing hydrofluoric acid, the effluents are normally reacted with a calcium compound such as calcium hydroxide, calcium oxide, calcium carbonate or calcium chloride, and the fluoride is fixed as sparingly soluble calcium fluoride.

Thus recovered calcium fluoride is flocculated with a flocculant, because it has too small particle sizes to be filtered as it is, and the floc formed is settled in a thickener or the like and filtered by a filter press or the like. For this reason, the calcium fluoride has a moisture content of as much as 50 to 60%, which makes it incapable of being reused for industrial applications because of large contents of impurity such as chlorine. In addition, because of the large volume of impurity, disposal problems are looming large.

Attempts for increasing the particle size have been made to form calcium fluoride keeping intact the skeleton of a natural calcium carbonate by passing a fluoride-containing effluent through the natural calcium carbonate of which the particle size is made uniform (for instance, see patent literatures 1 and 2). Those methods involve generation of a carbon dioxide gas in the process, the formulation of a calcium fluoride floc, or the central part of the calcium carbonate remaining unreacted. The recovered calcium fluoride has no particle size or flowability problems, but contains about 3 to 7% at best and 10-15% on average of calcium carbonate, which generates a large amount of carbon dioxide gas and water through the reaction of the expression (1) when used as a raw material for producing hydrogen fluoride, and consequently causes the problem of reducing the yield of hydrogen fluoride and causing the instability of the operation and a severe corrosion of the apparatus. As a case in point there is a report on the treatment of mixing several percents of calcium fluoride recovered by the method, with fluorite (for instance, see non-patent literature 1).
Reaction Formula 1

CaCO₃ + H₂SO₄ → CaSO₄ + H₂O + CO₂↑ (1)

Patent literature 1
   Japanese Patent Laid-open No. 06-063561 (applicant: Kurita Water Industries Ltd. and Hashimoto Chemical Co., Ltd., Title of the Invention: apparatus for treating fluoride-containing water)
Patent literature 2
   Japanese Patent Laid-open No. 06-063563 (applicant: Kurita Water Industries Ltd. and Hashimoto Chemical Co., Ltd., Title of the Invention: method for treating fluoride-containing water)
Non-patent literature 1
   New Energy and Industrial Technology Development Organization "Progressive Report 51101125 on development of technology related to prevention of global warming and HFC-23 destruction technology (2001)" reported on March, 2002 (Consignee: Japan Environmental Management Association For Industry)
   For a dilute fluoride-containing effluent containing several hundred ppm of fluoride, there is a technology of growing the crystals of calcium fluoride into particles with large sizes (for instance, see patent literatures 3 and 4, and non-patent literatures 2 and 3), but a technology for reusing a recovered substance has not yet been established, because the process has a small throughput for its scale, needs a pulverization step because of having too large particle sizes as 0.5 to 1 mm to use the recovered calcium fluoride as a raw material in producing hydrogen fluoride, and has a problem with selection for a seed crystal.
Patent Literature 3
   Japanese Patent Laid-Open No. 2003-225680 (applicant: Organo Corporation, Title of the Invention: method for treating effluent containing fluoride)
Patent Literature 4
   Japanese Patent Laid-Open No. 2003-305458 (applicant: Organo Corporation, Title of the Invention: method for treating effluent containing fluoride)
Non-patent Literature 2
   Takayuki Hashimoto in Organo Corporation, "fluorinated acid recycling technology using crystallization method" Clean Technology, May issue, Japan Industrial Publishing Co., Ltd., May, 2001, page 40 to 42
Non-patent Literature 3
   Haruki Myouga in Organo Corporation, "recovering water and material from effluent" Journal of Chemical Engineering of Japan, January issue, Society of Chemical Engineers, Japan, January, 2004, page 54 to 56

Recovered calcium fluoride obtained from calcium carbonate of which the particles are made uniform or recovered calcium fluoride obtained by crystal growth, can be used as a raw material for producing hydrogen fluoride by mixing several percent thereof with fluorite which is the raw material for the purpose, but those recovered calcium fluorides have the purity of about 92 to 97%, have large fluctuations in an ignition loss (a weight loss when heated in a temperature condition of 500 to 600°C for several hours) and in impurities. Consequently, there exist difficulties in the analysis and the operation management, and arises a major problem with the cost required for it.

Recovered calcium fluoride generally has the problems of a small average particle size, much secondary agglomeration, a very large specific surface area, a low bulk density, a high moisture content, a large ignition loss, a large amount of impurities such as chlorine, and the like. Accordingly, it is hardly used as a raw material for producing hydrogen fluoride, because of the problems of causing dust in drying, being poorly mixed with fluorite,high reactivity with sulfuric acid, indrease of chlorine impurities and the like.

JP-A-56144792 discloses the purification of wastewater by reacting the fluorine component with a Ca compound, e.g., Ca(OH)₂, followed by adjusting the pH to less than 3.

### Disclosure of the Invention

An object of the present invention is to efficiently precipitate most of fluoride as calcium fluoride having suitable particle sizes and high purity for producing hydrogen fluoride, from an fluoride-containing effluent containing little hydrofluoric acid and a comparatively high concentration of fluoride, or from an effluent containing hydrofluoric acid, in order to recover the precipitate, and thereby to provide it mainly as a raw material for producing hydrogen fluoride. According to the present invention, a large amount of industrial waste associated with the treatment of fixing fluoride can be reduced, and hydrogen fluoride that is a key material in a fluoride chemical industry can be prepared without using a resource-poor natural calcium fluoride (fluorite).

As a result of intensive investigations for achieving the above objects, the present inventors have found a technology for easily recovering calcium fluoride having suitable purity, particle sizes and bulk density which is suitable for preparation of hydrogen fluoride, by devising a solution composition and a synthesis condition during the reaction. Thus obtained calcium fluoride was also found to have large particle sizes, and have the advantages of not only high purity but also little silica and arsenic content, which elements cause a problem in a natural fluorite.

That is to say, the present invention as defined by independent claims 1 and 3 relates to the following aspects (1) to (13):
(1) A method for producing calcium fluoride, said method comprising introducing a fluoride-containing effluent together with an aqueous calcium chloride solution into a reaction system under an acidic condition with hydrochloric acid to deposit calcium fluoride particles of a comparatively large size with a purity of 98% or higher, and then recovering said particles;
(2) The method according to the aspect (1), wherein said acidic condition with hydrochloric acid is pH 2 or lower;
(3) The method according to the aspect (1), wherein the fluoride-containing effluent and/or the aqueous calcium chloride solution contain hydrochloric acid, or an aqueous hydrochloric acid solution is separately introduced continuously or intermittently into the reaction system;
(4) The method according to the aspect (1), wherein the reaction is conducted at from 30 to 90 °C;
(5) The method according to the aspect (1), wherein the calcium fluoride product has an average particle size of 5 to 300 µm;
(6) A reuse method comprising reacting a part or all of hydrochloric acid, which is contained in the solution after recovery of calcium fluoride formed by the reaction, with a calcium salt such as calcium hydroxide, calcium oxide and calcium carbonate to form calcium chloride, and using the formed aqueous calcium chloride solution as the aqueous calcium chloride solution according to the aspect (1);
(7) A method for producing calcium fluoride, said method comprising introducing a hydrofluoric acid-containing effluent together with an aqueous calcium chloride solution into a reaction system under an acidic condition with hydrochloric acid to deposit calcium fluoride particles of a comparatively large size with a purity of 98% or higher, and then recovering said particles;
(8) The method according to the aspect (7), wherein said acidic condition with hydrochloric acid is pH 2 or lower;
(9) The method according to the aspect (7), wherein the hydrofluoric acid-containing effluent and/or the aqueous calcium chloride solution contain hydrochloric acid, or an aqueous hydrochloric acid solution is separately introduced continuously or intermittently into the reaction system;
(10) The method according to the aspect (7), wherein the reaction is conducted at from 30 to 90 °C;
(11) The method according to the aspect (7), wherein the calcium fluoride product has an average particle size of 5 to 300 µm;
(12) A reuse method comprising reacting a part or all of hydrochloric acid, which is contained in the solution after recovery of calcium fluoride formed by the reaction, with a calcium salt such as calcium hydroxide, calcium oxide and calcium carbonate to form calcium chloride, and using the formed aqueous calcium chloride solution as the aqueous calcium chloride solution according to the aspect (7);
(13) A method for recycling calcium fluoride, characterized in that the calcium fluoride recovered by the method according to the aspect (1) or (7) is supplied as a raw material for producing hydrogen fluoride.

### Description of the Drawings

Figure 1 is a schematic diagram showing one example of a bench-scale plant used for recovering calcium fluoride.
Figure 2 is a schematic diagram showing one example of a bench-scale plant in which a line for sending a mother liquid to an effluent storage tank from a mother liquid storage tank with a mother liquid-sending pump is added to a bench-scale plant shown in Figure 1.

### Explanation of Reference Numbers

1: effluent storage tank, 1p: metering pump for effluent, 2: aqueous calcium chloride solution storage tank, 2p: metering pump for aqueous calcium chloride solution, 3: crystallization tank, 4: calcium fluoride slurry tank, 5: centrifugal extractor, 6: mother liquid storage tank, 6p: mother liquid-sending pump, 7: aqueous calcium chloride solution-producing tank, 7p: aqueous calcium chloride solution-sending pump.

### BEST MODE FOR CARRYING OUT THE INVENTION

In the present invention, a fluoride-containing effluent or a hydrofluoric acid-containing effluent is introduced into a reaction system together with an aqueous calcium chloride solution under an acidic condition with hydrochloric acid, preferably in the acidic condition with hydrochloric acid of pH 2 or lower, for example, in the acidic condition with hydrochloric acid where the solubility of calcium fluoride is 0.05% or higher. Then, calcium fluoride can grow into crystals having a high purity of 98% or higher and large particle sizes.

Thus obtained calcium fluoride followed by washing and dry, can be used as a raw material in an existing hydrogen fluoride production plant without any problem.

In addition, in the present invention, after crystallized calcium fluoride has been recovered from the fluoride-containing effluent, a part or all of remaining hydrochloric acid in the solution are reacted with a calcium compound such as calcium hydroxide, calcium oxide and calcium carbonate to form calcium chloride, and the resulting aqueous calcium chloride solution is reused for treatment for the fluoride-containing effluent.

In addition, in the present invention, after crystallized calcium fluoride has been recovered, a part or all of hydrochloric acid by-produced by a reaction of calcium chloride with hydrofluoric acid in an effluent containing hydrofluoric acid are reacted with a calcium compound such as calcium hydroxide, calcium oxide and calcium carbonate, to form calcium chloride, and the aqueous calcium chloride solution is reused for treatment for the effluent containing hydrofluoric acid.

Because a part or all of hydrochloric acid are thus reacted with a calcium compound such as calcium hydroxide, calcium oxide and calcium carbonate to produce an aqueous calcium chloride solution, the process can prevent the excess use of the calcium compound for fluoride, while a large amount of unreacted calcium remains in the treatment of directly fixing fluoride with the use of the above calcium compounds.

Furthermore, according to the present invention, most fluoride of calcium fluoride left soluble in the solution after the reaction of a fluoride-containing effluent or a hydrofluoric acid-containing effluent with an aqueous calcium chloride solution is fixed by deposition of calcium fluoride, when the resulting solution is reacted with a calcium compound such as calcium hydroxide, calcium oxide and calcium carbonate to produce an aqueous calcium chloride solution, which is driven by the increase of the calcium ion concentration and also the increase of the pH. As a result, fluoride in the obtained aqueous calcium chloride solution can be lowered to as low content as about 10 ppm.

An excess aqueous calcium chloride solution produced in a process according to the present invention can be supplied for industrial calcium chloride after concentrated to an appropriate concentration.

The present invention will be further specifically described. In a process of treating an fluoride-containing effluent containing little hydrofluoric acid and a high concentration of fluoride, or an effluent containing hydrofluoric acid, the effluent is normally reacted with a water-soluble calcium compound such as lime, slaked lime and calcium chloride so as to be kept around neutrality, and thereby most of fluoride is fixed as sparingly soluble calcium fluoride having solubility of about 0.002%.

The calcium fluoride obtained by such fixing treatment is made to be a floc with a flocculant, because of having too small particle sizes to be filtered in as obtained state, and then the floc is settled with a flocculant and is filtered by a filter press. For this reason, the calcium fluoride contains a moisture of as much as 50 to 80%, not only is uncapable of being reused to industrial applications, but also has a large volume, and hence causes a disposal problem.

In order to solve the problem, attempts have been made to form calcium fluoride having the skeleton of a calcium carbonate almost kept by reacting natural calcium carbonate having the particle sizes made uniform with hydrogen fluoride (see the expression (2)), and are adopted by many companies. In the process, most of calcium carbonate is recovered as calcium fluoride while keeping the particle sizes, but the recovered calcium fluoride has a problem of leaving about 3 to 10% of calcium carbonate in its central part as unreacted calcium carbonate with respect to the total, because the carbon dioxide gas becomes hardly extracted along with approaching to the central part, and inhibits a further progress of the reaction. The process also has a problem of forming a calcium fluoride floc of fine particles along with the generation of the carbon dioxide gas. In addition, the process cannot be directly applied to a neutral fluoride-containing effluent, but needs to use a liquid treated with a large amount of added acid corresponding to fluoride content.
Reaction Formula 2

CaCO₃ + 2HF → CaF₂ + H₂O + CO₂↑ (2)

For a dilute fluoride-containing effluent containing approximately several hundreds ppm of fluoride, there is a technology of growing calcium fluoride crystals on seed crystals into particles with large sizes, by adjusting the pH to approximately neutral and then adding a dilute aqueous calcium chloride solution together with the seed crystals in a fluidized bed to react them. The technology treats a small quantity for its scale, because the used seed crystals have as large particle sizes as 100 to 200 µm and a small specific surface area; and needs pulverization in order to use the recovered calcium fluoride as a raw material for preparation of hydrogen fluoride because of having such large particle sizes as 0.5 to 1 mm. In the above process, if calcium fluoride is employed as the seed crystals, the purity of recovered calcium fluoride can be made to be about 93 to 98%. However, impurities having low solubility are simultaneously precipitated and lower the purity of calcium fluoride.

In addition, in both processes of using calcium carbonate and using seed crystals, ranges of usable particle sizes of calcium carbonate and seed crystals are narrow, the cost for sorting them is needed, and an unexpectedly expensive raw material is to be used.

According to the method of the present invention where a fluoride-containing effluent or a hydrofluoric acid-containing effluent is simultaneously introduced and reacted with an aqueous calcium chloride solution under an acidic condition with hydrochloric acid, in the acidic condition with hydrochloric acid of pH 2 or lower, the solubility of calcium fluoride can be increased though it varies with the concentration of hydrochloric acid or a synthesis condition. For instance, when the hydrochloric acid concentration in a reaction solution is 3%, the solubility of calcium fluoride can be increased to about 0.2%, and when the hydrochloric acid concentration in the reaction solution is 6%, the solubility of calcium fluoride to about 0.4%.

Thus, the process in the present invention can increase the solubility of calcium fluoride in a reaction system; devises a method for introducing a fluoride-containing effluent or a hydrofluoric acid-containing effluent and an aqueous calcium chloride solution to the reaction system; thereby grows the crystals of calcium fluoride without forming the cloudiness due to fine calcium fluorides, even when using the fluoride-containing effluent containing a high concentration of fluoride or the hydrofluoric acid-containing effluent and an aqueous solution containing a high concentration of calcium chloride; and because of this, can easily obtain calcium fluoride crystals having high purity and large particle sizes. The calcium fluoride that has been obtained in the above process and then is lightly washed and dried, can be used as a raw material for an existing hydrogen fluoride production plant, without causing a physical and qualitative problem.

In the present invention, the process for reacting a fluoride-containing effluent or a hydrofluoric acid-containing effluent with an aqueous calcium chloride solution by simultaneously introducing them, may be performed in a batch processing system, but preferably a continuous system such as a fluidized bed system, a semi-batch system or a continuous overflow system. In addition, the method for introducing the fluoride-containing effluent or the hydrofluoric acid-containing effluent and the aqueous calcium chloride solution into a reaction system preferably employs a method for efficiently dispersing them into the reaction system such as a nozzle spray and an insert pipe having several small holes, and a finely controllable metering pump for controlling the flow rate. However, the present invention is not limited only to these introduction methods.

When treating a hydrofluoric acid-containing effluent, a large amount of hydrochloric acid naturally exist in a reaction system because hydrochloric acid is formed by the reaction of calcium chloride with hydrofluoric acid as shown in the expression (3), accordingly there is no need to take the trouble to supply hydrochloric acid.
Reaction Formula 3

2HF + CaCl₂ → CaF₂ + 2HCl (3)

As described below, an absorbing solution discharged from flon destruct equipment often contains hydrochloric acid and hydrofluoric acid, and an effluent containing concentrated hydrofluoric acid discharged in a fluoride chemical industry often contains hydrochloric acid. The method according to the present invention has advantages when employed for treating the above effluents, because the high concentration of hydrochloric acid in the effluents increases the solubility of calcium fluoride, and widens the range of a reaction condition for growing calcium fluoride into large particles having high purity.

When the method is applied for a fluoride-containing effluent, the fluoride anion reacts with calcium chloride to form a chloride anion, but not to form hydrochloric acid as shown in the expression (4).
Reaction Formula 4

CaCl₂ + 2F⁻ → CaF₂ + 2Cl⁻ (4)

Accordingly, in order to keep the reaction solution to a hydrochloride acidic condition, the method should employ a means of adding hydrochloric acid to either a fluoride-containing effluent or an aqueous calcium chloride solution, or to both of them beforehand, or alternatively, a means of separately introducing an aqueous hydrochloric acid solution continuously or intermittently into a reaction system. The hydrochloric acid used in the means can be any sort, but preferably is, for instance, waste hydrochloric acid which is as inexpensive as possible. It is disclosed that it is conceivable to use sulfuric acid, phosphoric acid or the like except for hydrochloric acid, but in the present method, those are not preferable because the purity of recovered calcium fluoride is remarkably lowered by coprecipitation of calcium sulfate or calcium phosphate. In addition, it is disclosed that a preferable result is obtained by using nitric acid, but it is difficult to use it because of the problem of the regulation for nitrogen in an effluent.

According to the disclosure, a reaction temperature when a fluoride-containing effluent or a hydrofluoric acid-containing effluent is introduced. together with an aqueous calcium chloride solution under an acidic condition with hydrochloric acid, may be ordinary temperature, but it is recommended to react them at a little higher temperature in order to stably obtain calcium fluoride having a large average particle size of 30 µm or larger. On the contrary, when the temperature is too high, energy is wasted. The reaction temperature according to the invention is 30 to 90°C, preferably 40 to 70°C. The reaction in the range is more advantageous, because it raises the solution temperature, which makes an introduced liquid more smoothly diffused and mixed, and thereby easily forms calcium fluoride crystals having high purity and large particle sizes.

Thus obtained calcium fluoride has an average particle size of 5 to 300 µm, and can be easily separated by a means such as centrifugation. An adhering mother liquid in a separated state is 5% or less, and for the particles with the average size of 50 µm or larger, it is 3% or less. The calcium fluoride after being washed and dried, has a purity of 99% or higher, 0.3% or less of an ignition loss, 0.1% or less of silica content, and 0.05% or less of chlorine content. These qualities are higher than those of normal fluorite (a purity of 97% or higher, 0.5% or less of silica content, and 0.5% or less of an ignition loss).

In addition, when the crystal is precipitated under an acidic condition with hydrochloric acid, the calcium fluoride has an advantage in containing little precipitation of metals, silica, arsenic and the like, of which the solubilities become higher than in a neutral region.

A solution flowing out from a reaction system of a fluoride-containing effluent or a hydrofluoric acid-containing effluent with an aqueous calcium chloride solution, and a filtrate after dehydration contain about 0.05 to 2% of calcium fluoride.

The method according to the present invention is difficult to be applied to an effluent containing a low concentration of fluoride, because the rate of recovery for calcium fluoride is extremely low.

The fluoride ion-containing effluent according to the present invention can be defined as an aqueous solution containing little hydrofluoric acid, presenting week acidity not lower than pH 3, neutrality or alkalinity, and containing many fluoride ions. The effluent may contain one or more in a dissolved state, simple salts such as ammonium fluoride, sodium fluoride, potassium fluoride, cesium fluoride, rubidium fluoride, aluminum fluoride, strontium fluoride, barium fluoride, iron fluoride and lead fluoride, and may additionally contain double salts such as sodium hexafluoroaluminate, potassium hexafluoroaluminate, sodium hexafluorosilicate and potassium hexafluorosilicate. It can include, for instance, an effluent containing sodium fluoride or potassium fluoride, which is normally produced in a step of alkaline cleaning for hydrogen fluoride; an effluent containing inorganic fluoride compounds dissolved in water, which is discharged in a process of producing inorganic fluoride compounds; an effluent containing potassium fluoride, potassium chloride and sodium fluoride, which is discharged in a process of producing a tantalum powder; and an effluent containing a mixture of unreacted potassium fluoride and potassium chloride, which is discharged in a chlorine-fluoride exchange reaction of organic compounds with potassium fluoride. In particular, it is recommended to use an effluent containing 0.1% or higher, preferably 0.5% or higher fluoride. An effluent containing a high concentration of fluoride has an advantage in easy concentration adjustment into an appropriate one by diluting the effluent with a solution flowing out from a reaction system and a filtrate after dehydration.

A solution flowing out from a reaction system of a fluoride-containing effluent or a hydrofluoric acid-containing effluent with an aqueous calcium chloride solution, and a filtrate after dehydration, include a large amount of hydrochloric acid. The hydrochloric acid is reacted with slurry consisting of a powder of a calcium compound such as calcium hydroxide, calcium oxide and calcium carbonate and of added water, and is changed to an aqueous solution of calcium chloride. In the reaction, a calcium ion concentration and a pH are raised, and thereby the fluoride content of the obtained aqueous solution of calcium chloride becomes as low as about 10 ppm. As a result, most of calcium fluoride dissolved in the flowing-out solution and the filtrate after dehydration, is precipitated as the solid of calcium fluoride. The precipitate has smaller particle sizes and a lower purity of 92 to 97%, compared to those of the calcium fluoride crystallized by the reaction of the fluoride-containing effluent or the hydrofluoric acid-containing effluent with the aqueous calcium chloride solution.

The aqueous calcium chloride solution after the solid contents have been removed by settling, centrifugation or the like, can be reused as an aqueous calcium chloride solution for being reacted with the fluoride-containing effluent or the hydrofluoric acid-containing effluent, as it is, or after thick calcium chloride has been added to the solution in order to adjust the concentration.

Particularly when an effluent containing a high concentration of hydrofluoric acid is treated, it is recommended to dilute the effluent containing the high concentration of hydrofluoric acid, with a solution flowing out after the reaction of a hydrofluoric acid-containing effluent with an aqueous calcium chloride solution has been finished, and the filtrate after dehydration. In addition, when treating the solution flowing out after the reaction and the filtrate after the dehydration with a calcium compound such as calcium hydroxide, calcium oxide and calcium carbonate, the addition of the calcium compound having a lower chemical equivalent than that of hydrochloric acid is more effective for the reuse of the solution as the aqueous calcium chloride solution which is prepared so as to contain hydrochloric acid.

### Examples

The present invention will now be explained in detail with reference to examples and a comparative example.

### Example 1

A 5 L reactor made of Teflon (a registered trademark, hereafter) PFA provided with a Teflon stirrer accommodating 1,000g of 5% hydrochloric acid, was set in a water bath of which the temperature is set to 50°C, and into the solution being stirred, 1,200g of the blended solution consisting of 1,000g of a neutral fluoride-containing effluent which contains 21.1% potassium fluoride, 7.2% potassium chloride and 0.4% sodium fluoride (7.1% fluoride in total), and of 200g of 35% hydrochloric acid, and 1,482g of a 14% aqueous calcium chloride solution were dropped at the same time in a preferable balance with a metering pump for five hours. In 10 minutes after the completion of dropping, stirring was stopped and the solution was suction-filtrated to recover 3,520g of the filtrate. The residue was lightly washed and then dried at 120°C for two hours, and 134.2g of calcium fluoride was recovered (a recovery rate of 92%). The calcium fluoride had the purity of 99.1%, an average particle size of 16.4µm, and 0.21% of loss on ignition at 500°C for two hours. The mother liquid contained 3.4% hydrochloric acid and 0.3% calcium fluoride. The pH of the mother liquid was 1.2.

### Example 2

A 5 L reactor made of Teflon PFA provided with a Teflon stirrer accommodating 1,000g of 2% hydrochloric acid, was set in a water bath of which the temperature was set to 50°C, and into the solution being stirred, 1,100g of the blended solution consisting of 1,000g of an alkaline fluoride-containing effluent containing 2.4% sodium fluoride with a pH of 9 and 100g of 35% hydrochloric acid, and 1,610g of a 2% aqueous calcium chloride solution were dropped at the same time in a preferable balance with a metering pump for five hours. In 10 minutes after the completion of dropping, stirring was stopped and the solution was suction-filtrated to recover 3,650g of the filtrate. The residue was lightly washed and then dried at 120°C for two hours, and 15.0 g of calcium fluoride was recovered (a recovery rate of 67%). The calcium fluoride had the purity of 99.0%, the average particle size of 9.8µm, and 0.23% of loss on ignition at 500°C for two hours. The mother liquid contained 1.5% hydrochloric acid and 0.2% calcium fluoride. The pH of the mother liquid was 1.5.

### Example 3

A 5 L reactor made of Teflon PFA provided with a Teflon stirrer accommodating 1,000g of 15% hydrochloric acid, was set in a water bath of which the temperature was set to 50°C, and into the solution being stirred, 1,000g of a hydrofluoric acid-containing effluent containing 17.2% hydrofluoric acid and 15.0% hydrochloric acid, and 1,704g of a 28% aqueous calcium chloride solution were dropped at the same time in a preferable balance with a metering pump for five hours. In 10 minutes after the completion of dropping, stirring was stopped and the solution was suction-filtrated to recover 3,400g of the filtrate. The residue was lightly washed and then dried at 120°C for two hours, and 287.6 g of calcium fluoride was recovered (a recovery rate of 86%). The calcium fluoride had the purity of 99.3%, the average particle size of 27.3µm, and 0.23% of loss on ignition at 500°C for two hours. The mother liquid contained 17.9% hydrochloric acid and 1.4% calcium fluoride. The pH of the mother liquid was not greater than 1.

### Example 4

A 5 L reactor made of Teflon PFA provided with a Teflon stirrer accommodating 1,000g of the mother liquid recovered in the example 3, was set in a water bath of which the temperature was set to 60°C, and into the solution being stirred, 1,000g of a hydrofluoric acid-containing effluent containing 17.2% hydrofluoric acid and 15.0% hydrochloric acid, and 1,704g of a 28% aqueous calcium chloride solution were dropped at the same time in a preferable balance with a metering pump for five hours. In 10 minutes after the completion of dropping, stirring was stopped and the solution was suction-filtrated to recover 3,380g of the filtrate. The residue was lightly washed and then dried at 120°C for two hours, and 301.5g of calcium fluoride was recovered (a recovery rate of 90%). The calcium fluoride had the purity of 99.5%, the average particle size of 36.8µm, and 0.21% of loss on ignition at 500°C for two hours. The mother liquid contained 18.5% hydrochloric acid and 1.4% calcium fluoride. The pH of the mother liquid was not greater than 1.

### Example 5 (comparative example)

The same operation as in the Example 4 was carried out without using a water bath at room temperature (20°C), and then 302.2g of calcium fluoride was recovered (a recovery rate of 90%), which is approximately the same amount as in the Example 4. The calcium fluoride had the purity of 99.2%, the average particle size of 8.7µm which is finer compared to that in the example 4 kept at 60°C, and 0.23% of loss on ignition at 500°C for two hours. The pH of the mother liquid was not greater than 1.

### Example 6

A 5 L reactor made of Teflon PFA provided with a Teflon stirrer accommodating 500g of 2% hydrochloric acid, was set in a water bath of which the temperature was set to 50°C, and into the solution being stirred, 2,687g of a hydrofluoric acid-containing effluent containing 3.2% hydrofluoric acid and 2.2% hydrochloric acid, which was recovered from a flon destruct equipment, and 852 g of a 28% aqueous calcium chloride solution were dropped at the same time in a preferable balance with a metering pump for five hours. In 10 minutes after the completion of dropping, stirring was stopped and the solution was suction-filtrated to recover 3,870g of the filtrate. The residue was lightly washed and then dried at 120°C for two hours, and 147.6 g of calcium fluoride was recovered (a recovery rate of 88%). The calcium fluoride had the purity of 99.0%, the average particle size of 6.8 µm, and 0.28% of loss on ignition at 500°C for two hours. The mother liquid contained 6.4% hydrochloric acid and 0.4% calcium fluoride. The pH of the mother liquid was not greater than 1.

### Comparative example 1

A 5 L reactor made of Teflon PFA provided with a Teflon stirrer accommodating 1,000g of water and 200.0g of a calcium carbonate powder of which the particle sizes were arranged to 50 to 300 µm, was set in a water bath of which the temperature was set to 50°C, and into the solution being stirred, 2,000g of a 5.0% hydrofluoric acid solution was dropped for 5 hours. In 1 hour after the completion of the dropping, stirring was stopped and the solution was suction-filtrated. The residue was lightly washed and then dried at 120°C for two hours, and 160.8 g of calcium fluoride was recovered. The calcium fluoride had the purity of 93.6%, the average particle size of 160 µm, and 3.4% of loss on ignition at 500°C for two hours.

### Example 7

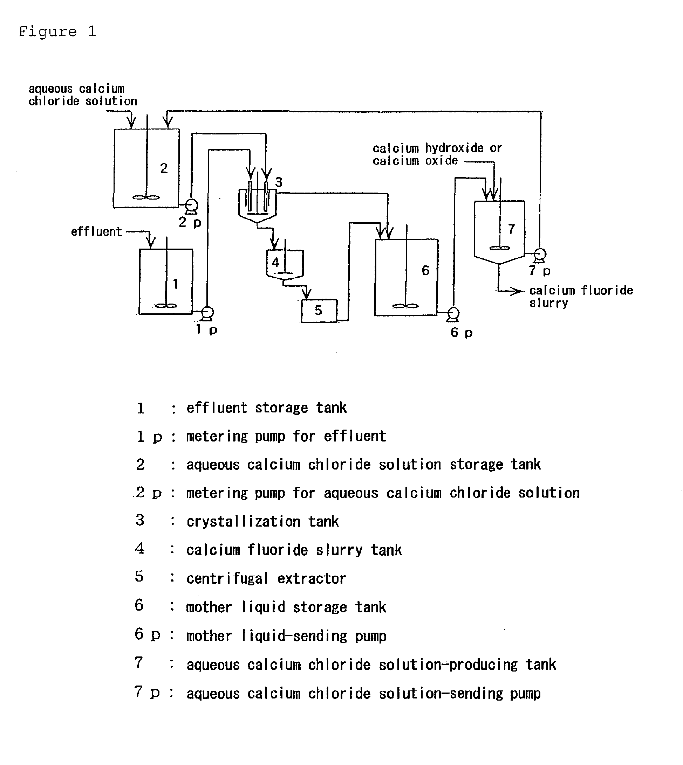

Using a bench-scale plant shown in Figure 1 comprising an effluent storage tank 1 with 200 L, a metering pump 1p for the effluent, an aqueous calcium chloride solution storage tank 2 with 500 L, a metering pump 2p for the aqueous calcium chloride solution, a crystallization tank 3 with 20 L, a calcium fluoride slurry tank 4, a centrifugal extractor 5, a mother liquid storage tank 6 with 500 L, a mother liquid-sending pump 6p, an aqueous calcium chloride solution-producing tank 7 with 200 L and an aqueous calcium chloride solution-sending pump 7p, a hydrofluoric acid-containing effluent which contains 17.2% hydrofluoric acid and 15.0% hydrochloric acid was continuously treated. The concentration of the aqueous calcium chloride solution used in the above treatment was adjusted to 15.9%. While the solution temperature in the crystallization tank 3 was kept to about 60°C with a heater for heating, 5kg of a hydrofluoric acid-containing effluent and 15kg of an aqueous calcium chloride solution per one hour were quantitatively injected into the crystallization tank 3, through an insert pipe having several small holes opened. The operation was continued for 64 hours in total to treat 320 kg of a hydrofluoric acid-containing effluent, and then 960 kg of an aqueous calcium chloride solution was used. During the reaction, a calcium fluoride slurry was intermittently extracted from the bottom part of the crystallization tank 3, sent to a calcium fluoride slurry tank 4, and filtrated with a centrifugal extractor 5. The recovered calcium fluoride was lightly washed and then dried at 120°C for one night, and 95.7 g in total of calcium fluoride was recovered (a recovery rate of 89%). The calcium fluoride had the purity of 99.5%, the average particle size of 72.5 µm, and 0.20% of loss on ignition at 500°C for two hours. The produced mother liquid during the operation was 1,184 kg, and contained 12.7% hydrochloric acid and 1.0% calcium fluoride.
The pH of the mother liquid was not greater than 1. The mother liquid in the amount of 150 kg was periodically charged into the aqueous calcium chloride solution-producing tank 7, and into the liquid being stirred, 18.0 kg of calcium hydroxide was added to change most of hydrochloric acid into calcium chloride and prepare a 15.9% aqueous calcium chloride solution. After the reaction, stirring was stopped, the solution was settled, and the supernatant liquid was sent to the aqueous calcium chloride solution storage tank 2 and was reused as an aqueous calcium chloride solution. The slurry left in the bottom of the aqueous calcium chloride solution-producing tank 7 was extracted, neutralized with calcium hydroxide and dehydrated.

### Example 8

Similarly to the Example 7, using a bench-scale plant shown in Figure 1, a hydrofluoric acid-containing effluent which contains 2.2% hydrofluoric acid and 3.2% hydrochloric acid was continuously treated. The concentration of the aqueous calcium chloride solution used in the above treatment was adjusted to 6.1%. While the solution temperature in a crystallization tank 3 was kept to about 50°C with a heater for heating, 5kg of a hydrofluoric acid-containing effluent and 5kg of an aqueous calcium chloride solution per one hour were quantitatively injected into the crystallization tank 3, through an insert pipe having several small holes opened. The operation was continued for 92 hours in total to treat 460 kg of the hydrofluoric acid-containing effluent, and then 460 kg of the aqueous calcium chloride solution was used. During the reaction, a calcium fluoride slurry was intermittently extracted from the bottom part of the crystallization tank 3, sent to a calcium fluoride slurry tank 4 and filtrated with a centrifugal extractor 5. The recovered calcium fluoride was lightly washed and then dried at 120°C for one night, and 17.9 kg in total of calcium fluoride was recovered (a recovery rate of 91%). The calcium fluoride had the purity of 99.4%, the average particle size of 58.9 µm, and 0.21% of loss on ignition at 500°C for two hours. The produced mother liquid during the operation was 904 kg by weight, and contained 3.7% hydrochloric acid and 0.2% calcium fluoride. The pH of the mother liquid was 1. The mother liquid in the amount of 150 kg was periodically charged into an aqueous calcium chloride solution-producing tank 7, and into the liquid being stirred, 5.6 kg of calcium hydroxide was added to change most of hydrochloric acid into calcium chloride and prepare a 5.4% aqueous calcium chloride solution. After the reaction, stirring was stopped, the solution was settled, the supernatant liquid was sent to an aqueous calcium chloride solution storage tank 2, a 28% aqueous calcium chloride solution was added therein to prepare a 6.1% aqueous calcium chloride solution, and the aqueous solution was reused. The slurry left in the bottom of the aqueous calcium chloride solution-producing tank 7 was extracted, neutralized with calcium hydroxide and dehydrated.

### Example 9

Similarly to the Example 7, using a bench-scale plant shown in Figure 1, a neutral fluoride-containing effluent which contains 21.1% potassium fluoride, 7.2% potassium chloride and 0.4% sodium fluoride (7.1% fluoride in total), was continuously treated. To the fluoride-containing effluent, 35% hydrochloric acid was blended beforehand so as to make the weight ratio to be 4 to 1, to prepare a hydrochloride acidic solution containing 5.7% fluoride and 7.0% hydrochloric acid by concentration, and the solution was charged into an effluent storage tank 1. The concentration of the aqueous calcium chloride solution used in the above treatment was adjusted to 16.7%. While the solution temperature in a crystallization tank 3 was kept to about 60°C with a heater for heating, 5kg of the fluoride-containing effluent and 5kg of the aqueous calcium chloride solution per one hour were quantitatively injected into the crystallization tank 3, through an insert pipe having several small holes opened. The operation was continued for 64 hours in total to treat 320 kg of a fluoride-containing effluent, and then 320 kg of the aqueous calcium chloride solution was used. During the reaction, a calcium fluoride slurry was intermittently extracted from the bottom part of the crystallization tank 3, sent to a calcium fluoride slurry tank 4 and filtrated with a centrifugal extractor 5. The recovered calcium fluoride was lightly washed and then dried at 120°C for one night, and 40.5 kg in total of calcium fluoride was recovered (a recovery rate of 96%). The calcium fluoride had the purity of 99.0%, the average particle size of 41.2 µm, and 0.27% of loss on ignition at 500°C for two hours. The produced mother liquid during the operation was 670 kg, and contained 3.6% hydrochloric acid and 0.2% calcium fluoride. The pH of the mother liquid was 1.1.

### Example 10

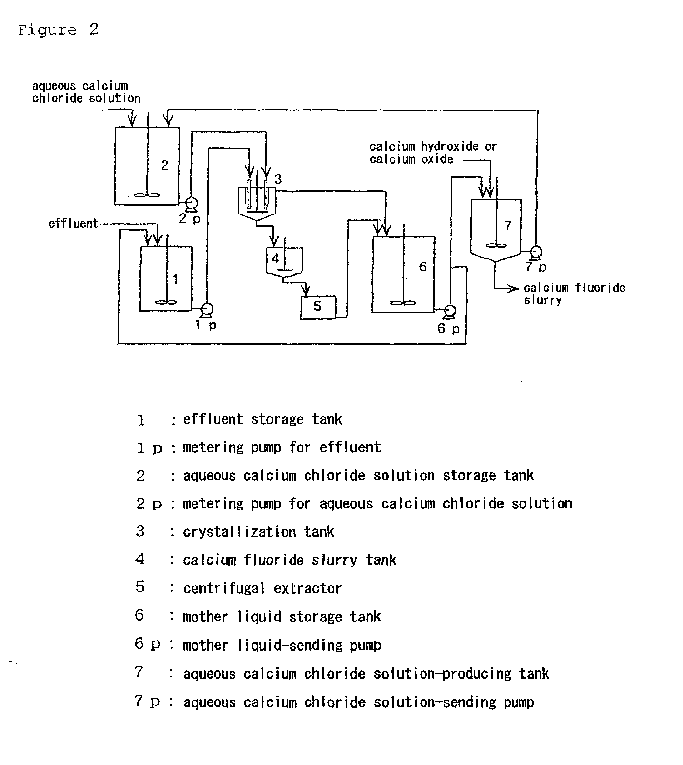

Using a bench-scale plant (shown in Figure 2) in which a line for sending a mother liquid to an effluent storage tank 1 from a mother liquid storage tank 6 with a mother liquid-sending pump 6p is added to a bench-scale plant shown in Figure 1, a thick hydrofluoric acid-containing effluent was treated. In the effluent storage tank 1, the effluent containing 48% hydrofluoric acid was diluted to 1/3 with the mother liquid (containing about 10% hydrochloric acid and 0.9% calcium fluoride), and was adjusted to 16.0% hydrofluoric acid and 6.7% hydrochloric acid, and the solution was continuously treated. The concentration of the aqueous calcium chloride solution used in the above treatment was adjusted to 14.8%. While the solution temperature in a crystallization tank 3 was kept to about 50°C with a heater for heating, 5kg of the hydrofluoric acid-containing effluent and 15kg of the aqueous calcium chloride solution per one hour were quantitatively injected into the crystallization tank 3, through an insert pipe having several small holes opened. The operation was continued for 72 hours in total to treat 360 kg of a hydrofluoric acid-containing effluent, and then 1,080 kg of an aqueous calcium chloride solution was used. During the reaction, a calcium fluoride slurry was intermittently extracted from the bottom part of the crystallization tank 3, sent to a calcium fluoride slurry tank 4 and filtrated with a centrifugal extractor 5. The recovered calcium fluoride was lightly washed and then dried at 120°C for one night, and 103.4 kg in total of calcium fluoride was recovered (a recovery rate of 92%). The calcium fluoride had the purity of 99.5%, the average particle size of 73.5 µm, and 0.20% of loss on ignition at 500°C for two hours. The produced mother liquid during the operation was 1,090 kg except for a liquid sent back to the mother liquid storage tank 6, and contained 9.4% hydrochloric acid and 0.9% calcium fluoride. The pH of the mother liquid was not greater than 1. The mother liquid in the amount of 150 kg was periodically charged into an aqueous calcium chloride solution-producing tank 7, and into the liquid being stirred, 14.3 kg of calcium hydroxide was added to change most of hydrochloric acid into calcium chloride and prepare a 14.2% aqueous calcium chloride solution. After the reaction, stirring was stopped, the solution was settled, the supernatant liquid was sent to an aqueous calcium chloride solution storage tank 2, a 28% aqueous calcium chloride solution was added therein to prepare a 14.8% aqueous calcium chloride solution, and the aqueous solution was reused. The slurry left in the bottom of the aqueous calcium chloride solution-producing tank 7 was extracted, neutralized with calcium hydroxide and dehydrated.

The calcium fluoride recovered in the bench-scale plant shown in the example was used as a raw material in a hydrogen fluoride production plant, but showed no problem with a plant operation and the grade of produced hydrogen fluoride.

### Industrial Applicability

The invention according to the aspect (1) or (7) can greatly reduce the load of industrial waste containing fluoride, by the treatment of fixing fluoride; and can recover calcium fluoride suitable for producing hydrogen fluoride without using a resource-poor fluorite.

The invention according to the aspect (2) or (8) can effectively carry out the treatment of fixing fluoride.

The invention according to the aspect (3) or (9) can effectively carry out the treatment of fixing fluoride.

The invention according to the aspect (4) or (10) can effectively carry out the treatment of fixing fluoride.

The invention according to the aspect (5) or (11) can effectively carry out the treatment of fixing fluoride.

The invention according to the aspect (6) or (12) can effectively reuse the effluent produced in the treatment of fixing fluoride.

The invention according to the aspect (13) can provide an effective technology for recycling fluoride.

## Claims

1. A method for producing calcium fluoride, said method comprising introducing a fluoride ion-containing effluent together with an aqueous calcium chloride solution into a reaction system to deposit calcium fluoride particles of a comparatively large size with a purity of 98% or higher, and then recovering said particles, wherein the pH of the reaction system being maintained at 2 or lower by an acidic condition with hydrochloric acid, wherein the calcium fluoride product has an average particle size of 5 to 300 µm, and wherein an aqueous hydrochloric acid solution is separately introduced into the reaction system, continuously or intermittently, wherein the reaction is conducted at a temperature from 30 to 90°C.

2. The method according to claim 1, further comprising reacting a part or all of hydrochloric acid, which is contained in the solution after recovery of calcium fluoride formed by the reaction, with a calcium salt such as calcium hydroxide, calcium oxide and calcium carbonate to form calcium chloride, and using the formed aqueous calcium chloride solution as the aqueous calcium chloride solution according to claim 1.

3. A method for producing calcium fluoride, said method comprising introducing a hydrofluoric acid-containing effluent together with an aqueous calcium chloride solution into a reaction system the pH of the reaction system being maintained at 2 or lower by an acidic condition with hydrochloric acid, to deposit calcium fluoride particles of a comparatively large size with a purity of 98% or higher, and the recovering said particles, wherein the calcium fluoride product has an average particle size of 5 to 300 µm, and wherein the hydrofluoric acid containing effluent and/or the aqueous calcium chloride solution contain hydrochloric acid, wherein the reaction is conducted at a temperature from 30 to 90°C.

4. The method according to claim 3, further comprising reacting a part or all of hydrochloric acid, which is contained in the solution after recovery of calcium fluoride formed by the reaction, with a calcium salt such as calcium hydroxide, calcium oxide and calcium carbonate to form calcium chloride, and using the formed aqueous calcium chloride solution as the aqueous calcium chloride solution according to claim 3.

5. A method for recycling calcium fluoride, **characterized in that** the calcium fluoride recovered by the method according to claim 1 or 3 is supplied as a raw material for producing hydrogen fluoride.

## Patentansprüche

1. Verfahren zur Herstellung von Calciumfluorid, wobei das Verfahren das Einführen eines Fluoridionen enthaltenden Abstroms zusammen mit einer wässrigen Calciumchloridlösung in ein Reaktionssystem unter Abscheidung von Calciumfluoridteilchen mit vergleichsweise großen Abmessungen mit einer Reinheit von 98% oder mehr und dann das Gewinnen der Teilchen umfasst, wobei der pH-Wert des Reaktionssystems durch einen sauren Zustand mit Chlorwasserstoffsäure auf 2 oder niedriger gehalten wird, wobei das Calciumfluoridprodukt eine mittlere Teilchengröße von 5 bis 300 µm aufweist und wobei eine wässrige Chlorwasserstoffsäurelösung getrennt in das Reaktionssystem eingeführt wird, und zwar kontinuierlich oder intermittierend, wobei die Reaktion bei einer Temperatur von 30 bis 90 °C durchgeführt wird.

2. Verfahren gemäß Anspruch 1, weiterhin umfassend das Umsetzen eines Teils oder der ganzen Chlorwasserstoffsäure, die nach der Gewinnung von durch die Reaktion gebildetem Calciumfluorid in der Lösung enthalten ist, mit einem Calciumsalz, wie Calciumhydroxid, Calciumoxid und Calcium-carbonat, unter Bildung von Calciumchlorid und unter Verwendung der gebildeten wässrigen Calciumchloridlösung als wässrige Calciumchloridlösung gemäß Anspruch 1.

3. Verfahren zur Herstellung von Calciumfluorid, wobei das Verfahren das Einführen eines Fluorwasserstoffsäure enthaltenden Abstroms zusammen mit einer wässrigen Calciumchloridlösung in ein Reaktionssystem, wobei der pH-Wert des Reaktionssystems durch einen sauren Zustand mit Chlorwasserstoffsäure auf 2 oder niedriger gehalten wird, unter Abscheidung von Calciumfluoridteilchen mit vergleichsweise großen Abmessungen mit einer Reinheit von 98% oder mehr und das Gewinnen der Teilchen umfasst, wobei das Calciumfluoridprodukt eine mittlere Teilchengröße von 5 bis 300 µm aufweist und wobei der Fluorwasserstoffsäure enthaltende Abstrom und/oder die wässrige Calciumchloridlösung Salzsäure enthalten, wobei die Reaktion bei einer Temperatur von 30 bis 90 °C durchgeführt wird.

4. Verfahren gemäß Anspruch 3, weiterhin umfassend das Umsetzen eines Teils oder der ganzen Chlorwasserstoffsäure, die nach der Gewinnung von durch die Reaktion gebildetem Calciumfluorid in der Lösung enthalten ist, mit einem Calciumsalz, wie Calciumhydroxid, Calciumoxid und Calcium-carbonat, unter Bildung von Calciumchlorid und unter Verwendung der gebildeten wässrigen Calciumchloridlösung als wässrige Calciumchloridlösung gemäß Anspruch 3.

5. Verfahren zum Recyceln von Calciumfluorid, **dadurch gekennzeichnet, dass** das nach dem Verfahren gemäß Anspruch 1 oder 3 gewonnene Calciumfluorid als Rohstoff zur Herstellung von Fluorwasserstoff zugeführt wird.

## Revendications

1. Procédé de production de fluorure de calcium, ledit procédé comprenant l'introduction d'un effluent contenant un ion fluorure conjointement avec une solution aqueuse de chlorure de calcium dans un système de réaction pour déposer des particules de fluorure de calcium d'une taille comparativement grande d'une pureté de 98 % ou plus, puis la récupération desdites particules, dans lequel le pH du système de réaction est maintenu à 2 ou moins par une condition acide avec de l'acide chlorhydrique, dans lequel le produit de fluorure de calcium a une taille de particule moyenne de 5 à 300 *µ*m, et dans lequel une solution aqueuse d'acide chlorhydrique est introduite séparément dans le système de réaction, en continu ou par intermittence, dans lequel la réaction est conduite à une température de 30 à 90 °C.

2. Procédé selon la revendication 1, comprenant en outre la réaction de tout ou partie de l'acide chlorhydrique, qui est contenu dans la solution après récupération du fluorure de calcium formé par la réaction, avec un sel de calcium tel que l'hydroxyde de calcium, l'oxyde de calcium et le carbonate de calcium pour former du chlorure de calcium, et utilisant la solution aqueuse de chlorure de calcium formée en tant que solution aqueuse de chlorure de calcium selon la revendication 1.

3. Procédé de production de fluorure de calcium, ledit procédé comprenant l'introduction d'un effluent contenant de l'acide fluorhydrique conjointement avec une solution aqueuse de chlorure de calcium dans un système de réaction, le pH du système de réaction étant maintenu à 2 ou moins par une condition acide avec de l'acide chlorhydrique, pour déposer des particules de fluorure de calcium d'une taille comparativement grande d'une pureté de 98 % ou plus, et la récupération desdites particules, dans lequel le produit de fluorure de calcium a une taille de particule moyenne de 5 à 300 *µ*m, et dans lequel l'effluent contenant de l'acide fluorhydrique et/ou la solution aqueuse de chlorure de calcium contiennent de l'acide chlorhydrique, dans lequel la réaction est conduite à une température de 30 à 90 °C.

4. Procédé selon la revendication 3, comprenant en outre la réaction de tout ou partie de l'acide chlorhydrique, qui est contenu dans la solution après récupération du fluorure de calcium formé par la réaction, avec un sel de calcium tel que l'hydroxyde de calcium, l'oxyde de calcium et le carbonate de calcium pour former du chlorure de calcium, et utilisant la solution aqueuse de chlorure de calcium formée en tant que solution aqueuse de chlorure de calcium selon la revendication 3.

5. Procédé de recyclage de fluorure de calcium, **caractérisé en ce que** le fluorure de calcium récupéré par le procédé selon la revendication 1 ou 3 est fourni en tant que matériau brut pour produire du fluorure d'hydrogène.
